# EUROPÄISCHE PATENTSCHRIFT

(11) **EP 4 450 331 B1**
(45) Veröffentlichungstag und Bekanntmachung des Hinweises auf die Patenterteilung: **08.04.2026**
(21) Anmeldenummer: 24155174.6
(22) Anmeldetag: 01.02.2024
(51) Int. Cl.: B60R 3/02, B60R 21/34

(54) **FAHRZEUG MIT FRONTSEITIGER TRITTSTUFEN-ANORDNUNG, INSBESONDERE IN FAHRZEUGQUERRICHTUNG BETRACHTET AUSSERMITTIG**
VEHICLE WITH FRONTAL STEP ARRANGEMENT, AXIALLY AS PERCEIVED IN CROSS-VEHICLE DIRECTION
VÉHICULE AVEC DISPOSITIF DE MARCHEPIED AVANT, NOTAMMENT POUR VÉHICULE, ACTIONNÉ DE MANIÈRE TRANSVERSALE

(30) Priorität: 19.04.2023 DE 102023203597
(43) Veröffentlichungstag der Anmeldung: 23.10.2024
(73) Patentinhaber: VOLKSWAGEN AG, 38440 Wolfsburg (DE)
(72) Erfinder: Päuker, Wolfgang, 38124 Braunschweig (DE)

(56) Entgegenhaltungen:
- DE-A1- 102015 221 767

## Beschreibung

Die Erfindung betrifft ein Fahrzeug mit einer frontseitigen Trittstufen-Anordnung, insbesondere außermittig am Fahrzeug angeordnet und/oder im Bereich einer in einer Stoßfängerabdeckung angeordneten Öffnung.

Die Erfindung bezieht sich vor allem auf Kraftfahrzeuge, im Speziellen auf höhere Kraftfahrzeuge, mit einer Bauhöhe von mehr als 1,80 m, insbesondere mehr als 2,00 m, mehr als 2,20 m oder mehr als 2,50 m. Diesbezüglich wird außerdem auf höhere Fahrzeuge mit einer Windschutzscheibe verwiesen, die nahe der Fahrzeugvorderseite angeordnet ist, insbesondere im Bereich von maximal 1,0 m entfernt von der Fahrzeugvorderseite. Dies ist bei vielen leichten Nutzfahrzeugen und Freizeitfahrzeugen, wie Campingmobilen, der Fall.

Unabhängig von Vorstehendem wird auf die Realisierung der Erfindung an Kraftfahrzeugen verwiesen, die als "Flat Front Vehicles (FFV)" bezeichnet werden.

Je höher ein Kraftfahrzeug baut, desto größer ist die Wahrscheinlichkeit, dass ein Mensch durchschnittlicher Körpergröße den oberen Bereich der Windschutzscheibe des Fahrzeuges nicht mehr vom Boden aus mit dem Arm erreicht.

Für Reinigungsarbeiten oder zum Entfernen von Eis ist das einfache Erreichen auch des oberen Bereichs der Windschutzscheibe eines höheren Kraftfahrzeuges ohne zusätzliche Hilfsmittel von Vorteil und aus Kundensicht wünschenswert.

Aus der Praxis ist es bekannt, an wie oben beschriebenen, höheren Kraftfahrzeugen eine Trittstufe oder mehrere Trittstufen vorzusehen, die es einer Person ermöglichen, sich mit dem Körpergewicht auf diese Trittstufe zu stellen, um auch den oberen Bereich der Windschutzscheibe des Kraftfahrzeuges zu erreichen. Die Trittstufe ist dazu ausreichend steif ausgebildet.

Aus CN 211139245 U ist ein aus mehreren Einzelelementen zusammengesetzter Querträger bekannt, der als Deformationselement zum Zwecke des Fußgängerschutzes ausgelegt ist. Die Druckschrift bezieht sich ausschließlich auf den Querträger selbst und nimmt nicht Bezug auf eine Trittstufen-Anordnung an einem Kraftfahrzeug.

Aus US 6,634,702 B1 ist ein Fahrzeug-Frontend-Modul bekannt, das einen Querträger und einen sich in Fahrzeughochrichtung unterhalb des Querträgers erstreckenden, unteren Fußgängerschutz-Querträger aufweist. Dabei ist der untere Fußgängerschutz-Querträger über mehrere, sich in Fahrzeughochrichtung und in Fahrzeuglängsrichtung erstreckende Verbindungsprofile mit dem Querträger verbunden. Auf eine Trittstufen-Anordnung wird nicht Bezug genommen.

Eine als Blockrahmen bezeichnete Fahrzeug-Frontend-Konstruktion, die konstruktiv ähnlich wie das Fahrzeug-Frontend-Modul aus US 6,634,702 B1 gestaltet ist, ist in EP 1 884 416 B1 offenbart. Auch in dieser Druckschrift wird nicht auf eine Trittstufen-Anordnung Bezug genommen.

Aus DE 10 2015 221 767 A1 ist eine Trittstufen-Anordnung in einem Kraftfahrzeug bekannt, die frontseitig in einem mittleren Fahrzeugbereich zwischen einem oberen Fußgängerschutz-Querträger und einem unteren Stoßfängerquerträger angeordnet ist. Dabei ist die Trittplatte als Deformationselement ausgebildet und im Wesentlichen aus hintereinander angeordneten Trittsegmenten aufgebaut, die in Fahrzeuglängsrichtung über einen Deformationsweg voneinander beabstandet sind. Diese Trittstufen-Anordnung erfordert einen über die erforderliche Höhe zwischen den Querträgern verfügbaren Bauraum. Die Anordnung eignet sich aus diesem Grund bei den meisten Kraftfahrzeugen nicht zur Realisierung in den Fahrzeugquerrichtungen betrachtet äußeren Fahrzeugbereichen.

Der Erfindung liegt die Aufgabe zugrunde, ein Fahrzeug mit einer frontseitigen Trittstufen-Anordnung zur Verfügung zu stellen, die sich insbesondere mit einem in Fahrzeughochrichtung nur geringem Bauraumbedarf auch in Fahrzeugquerrichtung in einem äußeren Fahrzeugbereich und/oder innerhalb einer in einer Stoßfängerabdeckung ausgebildeten Öffnung realisieren lässt. Dabei soll die Trittstufen-Anordnung ferner vorteilhaft in Bezug auf Fußgängerschutzanforderungen ausgebildet sein, insbesondere derart, dass die Trittstufen-Anordnung den Vorschriften der "UN Regulation No. 127-02" Rechnung trägt.

Die Lösung der Aufgabe erfolgt erfindungsgemäß mit den Merkmalen der unabhängigen Ansprüche. Weitere praktische Ausführungsformen und Vorteile der Erfindung sind in Verbindung mit den abhängigen Ansprüchen beschrieben.

Ein erfindungsgemäßes Fahrzeug mit einer frontseitigen Trittstufen-Anordnung weist eine in Fahrzeuglängsrichtung betrachtet vordere Tragstruktur und eine in Fahrzeuglängsrichtung hinter der vorderen Tragstruktur angeordnete hintere Tragstruktur sowie mindestens ein sich von der vorderen Tragstruktur zu der hinteren Tragstruktur erstreckendes Längserstreckungselement auf. Dabei ist mindestens eines der Elemente als Deformationsstruktur derart ausgelegt, dass eine von vorne in Fahrzeuglängsrichtung auf die vordere Tragstruktur einwirkende Anprallkraft eine Dreh- oder Schwenkbewegung der gesamten Trittstufen-Anordnungbewirkt. Das Grundkonzept der Erfindung kann daher mit anderen Worten auch so beschrieben werden, dass die Trittstufen-Anordnung so gestaltet ist, dass diese bei einer von vorne einwirkenden Anprallkraft, wie sie insbesondere im Falle eines Fußgängeranpralls auftritt, bewirkt, dass sich die gesamte Trittstufen-Anordnung durch Verschwenken oder Verdrehen aus dem Anprallbereich nach hinten weg bewegen kann.

Optional ist mindestens eines der Elemente als Deformationsstruktur derart ausgelegt, dass eine von vorne in Fahrzeuglängsrichtung auf die vordere Tragstruktur einwirkende Anprallkraft auch eine Relativbewegung zwischen der vorderen Tragstruktur und der hinteren Tragstruktur bewirkt. In diesem Fall ist wirdeine Relativbewegung zwischen der vorderen Tragstruktur und der hinteren Tragstruktur ermöglicht, und die Tragstruktur kann sich somit nach hinten weg bewegen, indem diese selbst als Deformationselement wirkt. Auf einzelne konstruktive Möglichkeiten, das Konzept der Erfindung an einem Kraftfahrzeug umzusetzen, wird im Folgenden in Verbindung mit den Unteransprüchen Bezug genommen.

Vorzugsweise ist die Trittstufen-Anordnung eines erfindungsgemäßen Fahrzeugs so ausgelegt, dass eine von vorne in Fahrzeuglängsrichtung durch einen Prüfkörper auf die vordere Tragstruktur einwirkende Anprallkraft bei einem Kraftniveau von maximal 5kN eine Eindringtiefe von mindestens 60 mm bewirkt.

In einer praktischen Ausführungsform eines erfindungsgemäßen Fahrzeugs erstrecken sich als Längserstreckungselemente mindestens zwei Längsstreben von der vorderen Tragstruktur zu der hinteren Tragstruktur. Vorzugsweise sind mehr als zwei Längsstreben vorgesehen, insbesondere mindestens drei, mindestens vier, mindestens fünf, mindestens sechs oder mehr Längsstreben. Daraus resultiert eine leiterartig ausgebildete Struktur, die im Vergleich zu einer Struktur, bei welcher die vordere Tragstruktur und die hintere Tragstruktur durch ein einziges großflächiges Element miteinander verbunden sind, eine nur sehr geringe Schubsteifigkeit aufweist. Dies gilt insbesondere für den Fall, dass die mindestens zwei Längsstreben eine nur geringe Querschnittsfläche aufweisen und/oder biegeweich bzw. gelenkig an der vorderen Tragstruktur und/oder an der hinteren Tragstruktur befestigt sind.

Das Längserstreckungselement kann alternativ auch flächig gestaltet sein, wenn durch in Längsrichtung angeordnete Langlöcher wie zuvor für einzelne Längsstreben beschrieben nur geringe Querschnittsflächen der im Element verbleibenden Längsstreben realisiert werden, die somit biegeweich zur Befestigung an der vorderen und/oder hinteren Tragstruktur sind.

Alternativ zu zwei oder mehr Längsstreben kann als Längserstreckungselement auch ein flächig ausgebildetes Element vorgesehen sein, das konstruktiv so gestaltet ist, dass es eine nur geringe Schubsteifigkeit aufweist. Diesbezüglich wird insbesondere auf eine gitter- oder wabenartige Struktur verwiesen.

In einer weiteren praktischen Ausführungsform eines erfindungsgemäßen Fahrzeugs ist das mindestens eine Längserstreckungselement relativbeweglich gegenüber der vorderen Tragstruktur und/oder relativbeweglich gegenüber der hinteren Tragstruktur angeordnet. Dies gilt vorzugsweise für jedes Längserstreckungselement, sofern zwei oder mehr Längserstreckungselemente vorgesehen sind.

Alternativ oder ergänzend zu den vorstehend beschriebenen Ausführungsformen kann die vordere Tragstruktur auch relativbeweglich gegenüber einem weiteren Karosserieelement fixiert sein. Eine derartige Gestaltung eignet sich insbesondere zur Ausbildung einer Sollbiegestelle oder einer drehgelenkigen Anordnung der vorderen Tragstruktur oder der hinteren Tragstruktur gegenüber einem weiteren Karosserieelement. Als weiteres Karosserieelement kann insbesondere ein sich in Fahrzeughochrichtung erstreckender Vertikalträger und/oder ein sich in Fahrzeugquerrichtung erstreckender Stoßfängerquerträger dienen. Vorzugsweise ist die vordere Tragstruktur unmittelbar an einem solchen Vertikalträger oder einem solchen Stoßfängerquerträger befestigt. Die Relativbeweglichkeit kann insbesondere dadurch erzielt werden, dass die Befestigung der vorderen Tragstruktur nur einseitig gegenüber dem Vertikalträger und/oder gegenüber dem Stoßfängerquerträger erfolgt. Die Relativbeweglichkeit kann insbesondere dadurch definiert werden, dass an einer Sollbiegestelle die Biegesteifigkeit reduziert ist, insbesondere durch Verringerung des Querschnittsprofils und/oder durch andere konstruktive Maßnahmen zur Verringerung der Biegesteifigkeit.

In einer weiteren praktischen Ausführungsform eines erfindungsgemäßen Fahrzeugs sind die vordere Tragstruktur und die hintere Tragstruktur in einem Verbindungsbereich zusammengeführt und gemeinsam an einem weiteren Karosserieelement befestigt. Diesbezüglich ist es insbesondere von Vorteil, wenn die vordere Tragstruktur und die hintere Tragstruktur in einem gegenüber der vorderen Tragstruktur in Fahrzeuglängsrichtung nach hinten versetzten Bereich zusammengeführt sind. Als Karosserieelement zur Befestigung eignet sich in diesem Fall insbesondere eine Schottplatte, welche gegenüber einem Fahrzeugquerträger in Fahrzeuglängsrichtung weiter hinten angeordnet ist. Der Abstand zwischen dem Stoßfängerquerträger und der Schottplatte entspricht dabei üblicherweise der wirksamen Länge eines dazwischen angeordneten Deformationselements.

In einer weiteren praktischen Ausführungsform eines erfindungsgemäßen Fahrzeugs ist die vordere Tragstruktur mittelbar oder unmittelbar an einem Stoßfängerquerträger befestigt und/oder die hintere Tragstruktur ist mittelbar oder unmittelbar an einer Schottplatte befestigt. In diesem Fall kann ein erfindungsgemäßes Fahrzeug mit verhältnismäßig geringem konstruktiven Aufwand und geringem zusätzlichen Gewicht an einem Kraftfahrzeug umgesetzt werden, da der Stoßfängerquerträger und die Schottplatte bei den meisten Fahrzeugen ohnehin vorhandene Elemente eines Crash-Management-Systems sind. Die Positionierung der Trittstufen-Anordnung erfolgt dabei insbesondere in Fahrzeugquerrichtung betrachtet außermittig, vorzugsweise außenseitig des Deformationselements eines Crash-Management-Systems.

Unter Bezugnahme auf das Vorstehende wird insbesondere auf Fahrzeuge verwiesen, bei welchen die vordere Tragstruktur und die hintere Tragstruktur in Fahrzeugquerrichtung betrachtet außenseitig eines Deformationselements angeordnet sind, welches sich in Fahrzeuglängsrichtung von einem Stoßfängerquerträger nach hinten bis zu einer Schottplatte erstreckt. Die Schottplatte ist üblicherweise ein flaches Bauteil mit einer Dicke, die deutlich geringer als die Länge und die Breite ist. Die Schottplatte ist in der Regel stirnseitig eines Längsträgers angeordnet und ragt in radialer Richtung gegenüber dem Längsträger nach außen hervor, meist in allen Richtungen.

Wenn die vordere Tragstruktur und die hintere Tragstruktur nur einseitig fixiert sind, insbesondere in Fahrzeugquerrichtung betrachtet fahrzeuginnenseitig, ergibt sich eine Anbindung, bei welcher im Falle einer von vorne in Fahrzeuglängsrichtung auf die vordere Tragstruktur einwirkenden Anprallkraft eine Dreh- oder Schwenkbewegung um den jeweiligen Bereich, in welchem die vordere Tragstruktur und die hintere Tragstruktur einseitig fixiert sind, bewirkt wird.

Die Erfindung wurde insbesondere für Fahrzeuge gemacht, bei welchen eine Trittstufen-Anordnung innerhalb einer in eine Stoßfängerverkleidung ausgebildeten Öffnung vorgesehen sein soll. Damit ist gemeint, dass die Trittstufen-Anordnung durch Nutzung der Öffnung erreichbar sein soll, beispielweise indem die Trittstufen-Anordnung im Bereich des unteren Endes der Öffnung derart angeordnet ist, dass sie genutzt werden kann, indem ein Fuß in die Öffnung eingebracht und dann nach unten auf der Trittstufen-Anordnung abgestellt wird. Es wird insoweit auf Fahrzeuge verwiesen, deren Stoßfängerverkleidung eine entsprechende Öffnung aufweisen und innerhalb deren Öffnung eine wie vorstehend beschriebene Trittstufen-Anordnung realisiert ist. Die Öffnung erstreckt sich vorzugsweise in Fahrzeugquerrichtung betrachtet außermittig, in einem äußeren Fahrzeugfrontbereich, insbesondere im Bereich eines rechten oder linken Scheinwerfers und in Fahrzeughochrichtung unterhalb des jeweiligen Scheinwerfers und/oder außenseitig eines mittig angeordneten Kühlergitters. Die Trittstufen-Anordnung kann auch innerhalb der Öffnung unterhalb der von außen sichtbaren Unterkante derart angeordnet sein, dass ein Fuß in die Öffnung eintauchen und geringfügig nach unten abtauchen kann, um auf der Trittstufen-Anordnung platziert zu werden. Auch eine solche Anordnung wird als Anordnung innerhalb der Öffnung im Sinne der Erfindung betrachtet.

In einer weiteren praktischen Ausführungsform eines erfindungsgemäßen Fahrzeugs ist an der vorderen Tragstruktur eine Sollbruchstelle ausgebildet und/oder an der hinteren Tragstruktur eine Sollbiegestelle oder ein Drehgelenk ausgebildet. Alternativ kann eine wie vorstehend beschriebene Ausbildung auch umgekehrt realisiert sein. In diesem Fall ist an der vorderen Tragstruktur eine Sollbiegestelle oder ein Drehgelenk ausgebildet und/oder an der hinteren Tragstruktur ist eine Sollbruchstelle ausgebildet. Im Falle einer derartigen konstruktiven Gestaltung ist vorgesehen, dass bei Einwirkung einer in Fahrzeuglängsrichtung von vorne einwirkenden Anprallkraft die Sollbiegestelle oder das Drehgelenk als zentrale Drehachse für die gesamte Trittstufen-Anordnung dient. Zusätzlich kann durch eine geringe Schubsteifigkeit ein Kollabieren des Längserstreckungselements vorgesehen sein, um weitere Deformationsenergie über die Trittstufen-Anordnung aufzunehmen.

Weitere praktische Ausführungsformen der Erfindung sind nachfolgend im Zusammenhang mit den Zeichnungen beschrieben. Es zeigen:
- Fig. 1: einen Ausschnitt eines Vorderwagens eines Kraftfahrzeuges in einer isometrischen Ansicht mit einer ersten Ausführungsform einer Trittstufen-Anordnung, die in einem äußeren Fahrzeugfrontbereich hinter der Stoßfängerverkleidung im Bereich einer in der Stoßfängerverkleidung ausgebildeten Öffnung vorgesehen ist,
- Fig. 2: den Fahrzeugvorderwagen aus Fig. 1 mit einem außenseitig weggeschnittenen Bereich zur Sichtbarmachung der Trittstufen-Anordnung,
- Fig. 3: nur die Konstruktion der Trittstufen-Anordnung aus den Fig. 1 und 2,
- Fig. 4: die Trittstufen-Anordnung aus den Fig. 1 bis 3 vor dem Anprall eines Prüfkörpers,
- Fig. 5: die Trittstufen-Anordnung aus den Fig. 1 bis 3 nach dem Anprall eines Prüfkörpers,
- Fig. 6: eine weitere Ausführungsform einer Trittstufen-Anordnung mit einer vorderen Tragstruktur, welche mit der hinteren Tragstruktur zusammengeführt ist,
- Fig. 7: eine weitere Ausführungsform einer Trittstufen-Anordnung mit einem vorderen Tragelement, das über ein Deformationselement mit dem Stoßfängerquerträger verbunden ist,
- Fig. 8: eine weitere Ausführungsform einer Trittstufen-Anordnung mit einer Sollbruchstelle im Bereich der vorderen Tragstruktur und einer Sollbiegestelle im Bereich der hinteren Tragstruktur und
- Fig. 9: eine weitere Ausführungsform einer Trittstufen-Anordnung mit einer Sollbruchstelle im Bereich der hinteren Tragstruktur und einer Sollbiegestelle im Bereich der vorderen Tragstruktur.

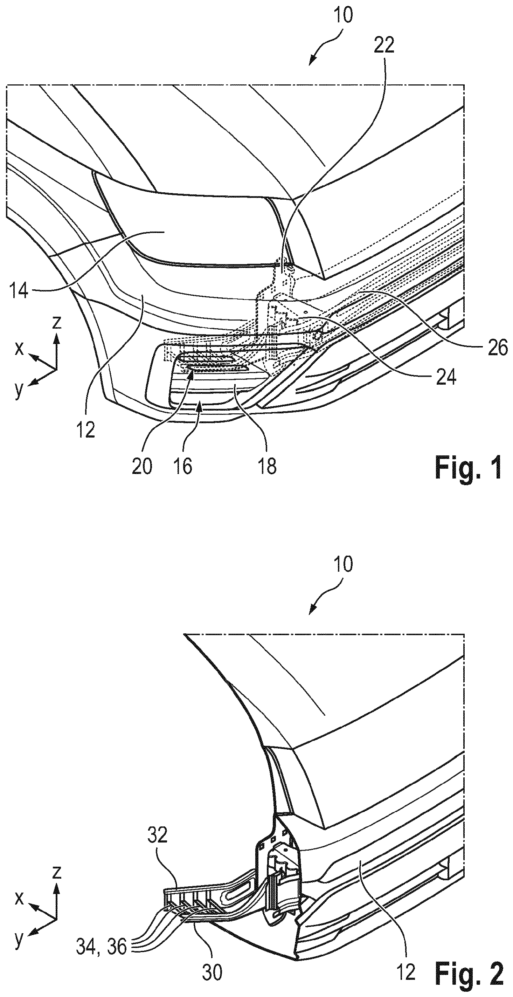

Die Figuren 1 und 2 zeigen eine isometrische Darstellung eines Fahrzeugvorderwagens 10 mit einer vorderen Stoßfängerverkleidung 12, welche sich im Wesentlichen über die gesamte, sich in Fahrzeugquerrichtung (y-Richtung) erstreckende Fahrzeugbreite erstreckt. Oberhalb der Stoßfängerverkleidung 12 ist ein Frontscheinwerfer 14 angeordnet. Wie in Figur 1 erkennbar ist, ist unterhalb des Frontscheinwerfers 14 in der Stoßfängerverkleidung 12 eine Öffnung 16 ausgebildet, in welcher ein Einsatzelement 18 angeordnet ist.

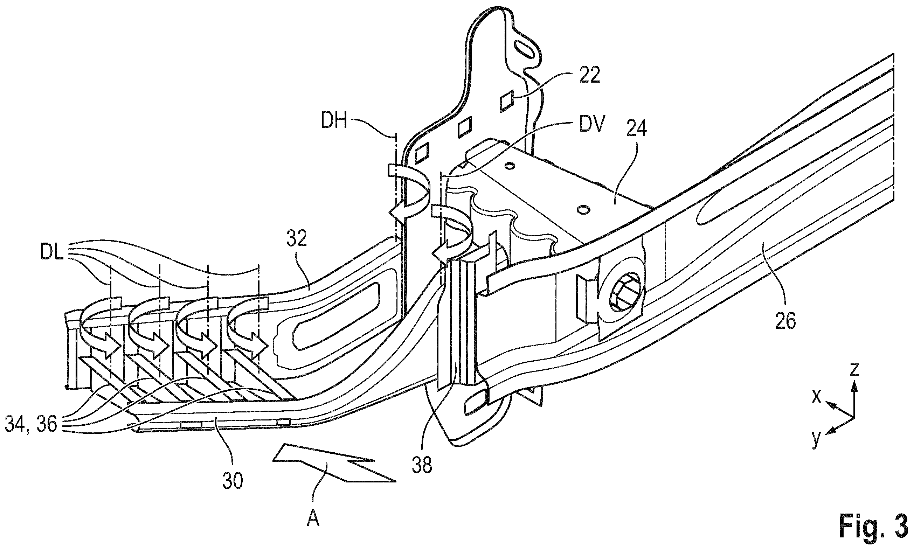

In Figur 1 ist gestrichelt dargestellt eine Trittstufen-Anordnung 20, welche sich in Fahrzeugquerrichtung betrachtet außenseitig an einer Anordnung aus einer Schottplatte 22, einem Deformationselement 24 und einen Stoßfängerquerträger 26 anschließt. Diese Elemente sind in den Figuren 2 und 3 im Detail dargestellt und werden im Folgenden noch detailliert beschrieben.

Aus Figur 1 ist noch ersichtlich, dass sich die Trittstufen-Anordnung 20 innerhalb der Öffnung 16 in Fahrzeuglängsrichtung hinter der Stoßfängerverkleidung 12 befindet.

Wie aus den Figuren 2 und 3 gut ersichtlich ist, umfasst die Trittstufen-Anordnung 20 eine vordere Tragstruktur 30, eine hintere Tragstruktur 32 und mehrere, sich in Fahrzeuglängsrichtung von der vorderen Tragstruktur 30 zu der hinteren Tragstruktur 32 erstreckende Längserstreckungselemente 34 in Form von Längsstreben 36.

In Figur 3 ist gut erkennbar, dass die vordere Tragstruktur 30 an einem sich in Fahrzeughochrichtung (z-Richtung) erstreckenden Vertikalträger 38 befestigt ist, welcher in Figur 3 nur ausschnittsweise gezeigt ist. Der Vertikalträger 38 ist mit dem Stoßfängerquerträger 26 verbunden.

Der Vertikalträger 38 führt in Fahrzeughochrichtung (z-Richtung) nach oben zu einem nicht dargestellten oberen Querträger, welcher sich parallel zu dem Stoßfängerquerträger 26 erstreckt. Dieser nicht dargestellte obere Querträger oberhalb des Stoßfängerquerträgers 26 wird auch als oberer Fußgängerschutzquerträger bezeichnet. Zur Klarstellung wird darauf hingewiesen, dass der nicht dargestellte obere Querträger zur Realisierung der Erfindung nicht erforderlich ist. Dies geht insbesondere auch aus dem Wortlaut des Anspruchs 1 hervor, welcher nicht auf einen oberen Querträger Bezug nimmt.

Die hintere Tragstruktur 32 ist mit der Schottplatte 22 verbunden. Die Schottplatte 22 wiederum ist über das Deformationselement 24 mit dem Stoßfängerquerträger 26 verbunden.

Der Stoßfängerquerträger 26, das Deformationselement 24, die Schottplatte 22 und ein sich hinter der Schottplatte 22 anschließender Längsträger (nicht dargestellt) bilden ein Crash-Management-System des Kraftfahrzeuges. Die Trittstufen-Anordnung 20 ist damit außenseitig des Crash-Management-Systems in Verlängerung der Schottplatte 22 und des Stoßfängerquerträgers 26 ausgebildet. Dabei bildet die vordere Tragstruktur 30 eine außenseitige Verlängerung des Stoßfängerquerträgers 26, wobei die vordere Tragstruktur 30 gegenüber dem Stoßfängerquerträger 26 um die sich in Fahrzeuglängsrichtung erstreckende Tiefe des Vertikalträgers 38 versetzt angeordnet ist. Die hintere Tragstruktur 32 bildet eine außenseitige Verlängerung der Schottplatte 22.

Die Längsstreben 36 sind gelenkig gegenüber der hinteren Tragstruktur 32 angeordnet, was durch die mit Pfeilen und jeweils einer Linie DL gekennzeichneten Drehachsen visualisiert ist. Ferner sind die Anbindungsbereiche der vorderen Tragstruktur 30 und der hinteren Tragstruktur 32 funktional wie ein Drehgelenk ausgelegt, was durch die Linie DV für die vordere Tragstruktur 30 und die Linie DH für die hintere Tragstruktur 32 visualisiert ist.

Kommt es zu einer von vorne in Fahrzeuglängsrichtung (x-Richtung) auf die vordere Tragstruktur 30 einwirkende Anprallkraft gemäß dem Pfeil A, führt dies dazu, dass sich die vordere Tragstruktur 30 um die Linie DV und die hintere Tragstruktur 32 um die Linie DH gelenkig verdrehen. Ferner werden die Längsstreben 36 um die Achsen DL verdreht, so dass die Trittstufen-Anordnung 20 zumindest teilweise kollabiert. Dadurch ist die Schubsteifigkeit der Trittstufen-Anordnung 20 sehr gering, was sich vorteilhaft auf den Fußgängerschutz auswirkt und ein Kollabieren der Trittstufen-Anordnung 20 bereits bei geringen Kräften bewirkt.

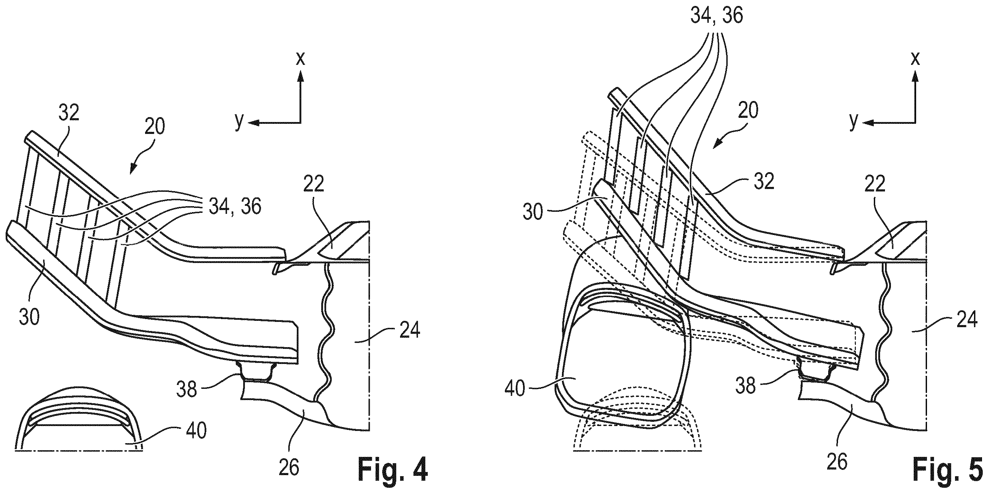

In den Figuren 4 und 5 ist die Funktionsweise gut erkennbar, wobei Figur 4 die Trittstufen-Anordnung 20 vor dem Auftreffen eines Prüfkörpers 40 zeigt und Figur 5 die Trittstufen-Anordnung 20 nach dem Auftreffen des Prüfkörpers 40 zeigt. In Figur 5 ist gestrichelt dargestellt auch die Position der Trittstufen-Anordnung 20 vor dem Aufprall des Prüfkörpers 40.

Es ist erkennbar, dass sich die vordere Tragstruktur 30 gegenüber der hinteren Tragstruktur 32 angenähert hat, indem sich der Winkel der Längsstreben 36 durch Verdrehen gegenüber der vorderen Tragstruktur 30 und der hinteren Tragstruktur 32 verändert hat.

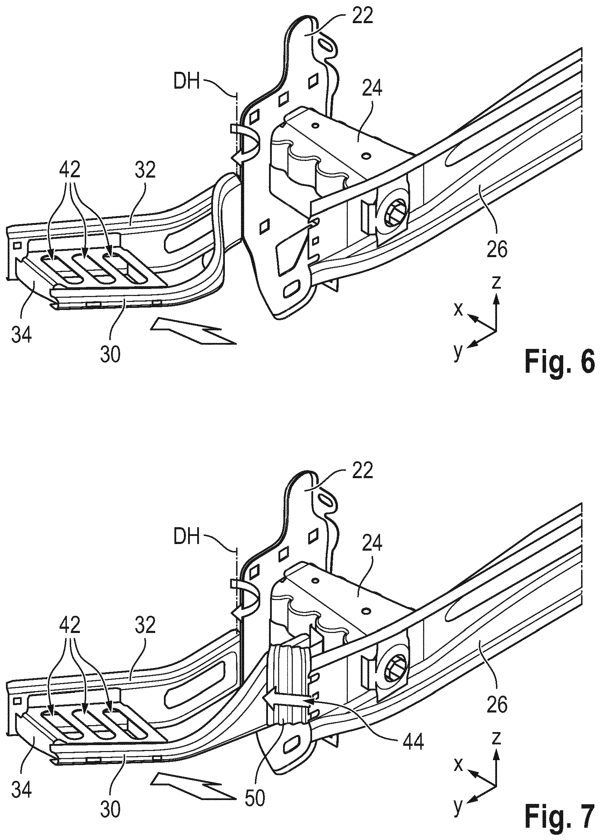

In den Figuren 6 bis 9 sind weitere Ausführungsformen von Trittstufen-Anordnung 20 gezeigt, wobei für identische oder zumindest funktionsgleiche Elemente die gleichen Bezugszeichen wie in den Figuren 1 bis 5 verwendet werden.

Bei der in Figur 6 gezeigten Anordnung sind die vordere Tragstruktur 30 und die hintere Tragstruktur 32 gegenseitig zusammengeführt, so dass sich nur eine Drehachse um die Linie DH ergibt. Ferner ist nur ein Längserstreckungselement 34 zwischen der vorderen Tragstruktur 30 und der hinteren Tragstruktur 32 vorgesehen, welches mehrere, sich in Fahrzeuglängsrichtung (Längsrichtung) erstreckende Langlöcher 42 aufweist. Dadurch weist das Längserstreckungselement 34 eine reduzierte Schubsteifigkeit auf und ermöglicht es, bei Auftreffen der hinteren Tragstruktur 32 auf ein weiteres Karosserieelement und einer ausreichenden großen, in Fahrzeuglängsrichtung von vorne nach hinten einwirkenden Kraft auf die vordere Tragstruktur 30 ein Kollabieren des Längserstreckungselement 34 analog zu der in Verbindung mit den Figuren 1 bis 5 beschriebenen Ausführungsform.

Die in Figur 7 gezeigte Ausführungsform entspricht im Wesentlichen der in Figur 6 gezeigten Ausführungsform mit dem Unterschied, dass die vordere Tragstruktur 30 über ein als Streckelement 50 ausgebildetes Element mit dem Stoßfängerquerträger 26 verbunden ist. Das Streckelement 50 kann auch Teil eines in Figur 7 nicht dargestellten Vertikalträgers sein, wie er in den Figuren 1 bis 5 ansatzweise gezeigt und beschrieben ist. Das Streckelement 50 weist in der gezeigten Ausführungsform eine Vielzahl von Faltungen auf und ist dazu ausgebildet, dass sich die vordere Tragstruktur 30 bereits bei relativ geringer Krafteinwirkung in Längsrichtung gemäß dem Pfeil 44 verschieben lässt, indem sich das aufgefaltete Streckelement 50 längt und ausfaltet. Auf diese Art und Weise kann die vordere Tragstruktur 30 innenseitig in Richtung der hinteren Tragstruktur 32 verschoben und damit an die hintere Tragstruktur 32 angenähert werden, ohne dass die Verbindung zum Stoßfängerquerträger 26 abreißt.

Alternativ zu dem dargestellten Streckelement 50 kann auch eine Drehfeder, ein Winkelblech oder ein sonstiges elastisch oder plastisch vorgespanntes Element angeordnet werden, das eine Relativverschiebung der vorderen Tragstruktur 30 in Richtung der hinteren Tragstruktur 32 ermöglicht. In diesem Zusammenhang wird insbesondere auf die Möglichkeit verwiesen, eine wie in Figur 3 gezeigte Anordnung um ein Winkelblech zu ergänzen, das zwischen Vertikalträger 38 und dem Stoßfängerquerträger 26 derart angeordnet und ausgelegt ist, dass es sich bei einer Krafteinwirkung in Fahrzeuglängsrichtung von vorne nach hinten plastisch ausstreckt und insoweit ähnlich verhält wie das in Figur 7 dargestellte Streckelement 50. Ein solches, nicht dargestelltes Winkelblech ist in der Herstellung deutlich kostengünstiger, da es konstruktiv einfacher gestaltet ist. Das Winkelblech kann insbesondere eine Gestaltung mit einer in Fahrzeugquerrichtung und in Fahrzeughochrichtung orientierten Anlagefläche zum Vertikalträger 38 und einer sich in Fahrzeughochrichtung und in Fahrzeuglängsrichtung nach vorne erstreckenden Verbindungsfläche aufweisen, mittels welcher ein Abstand in Fahrzeuglängsrichtung zwischen Vertikalträger 38 und Stoßfängerquerträger 26 hergestellt wird.

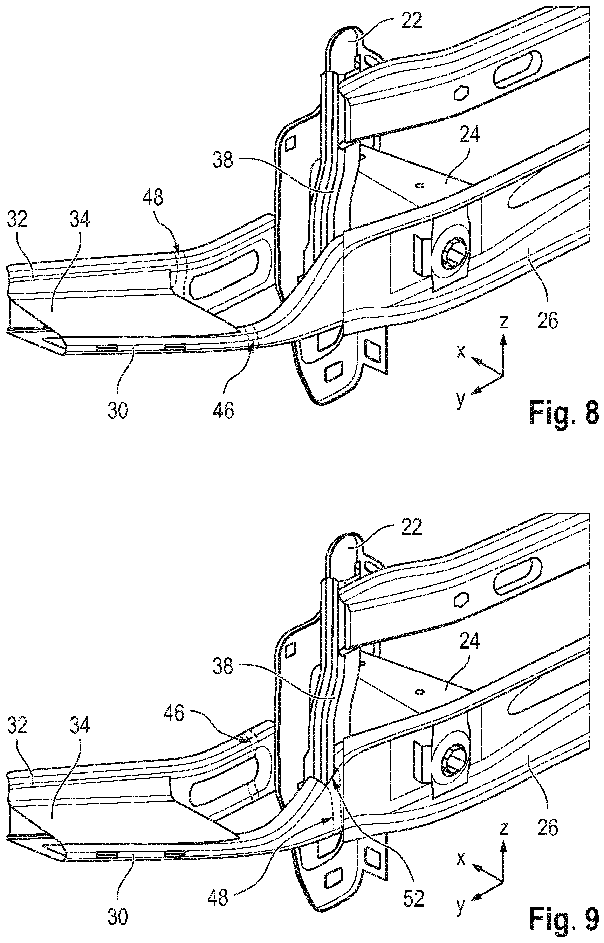

In Figur 8 ist eine Ausführungsform gezeigt, bei welcher innenseitig der vorderen Tragstruktur 30, d.h. in dem Bereich des zum Stoßfängerquerträger 26 gerichteten Endes der vorderen Tragstruktur 30, eine Sollbruchstelle 46 und innenseitig der hinteren Tragstruktur 32, d.h. in dem Bereich des zur Schottplatte 22 gerichteten Endes der hinteren Tragstruktur 32, eine Sollbiegestelle 48 vorgesehen ist. Die Sollbruchstelle 46 ist durch Materialverjüngung erzielt und kann zusätzlich durch eine Materialschwächung ergänzt sein, insbesondere durch eine Perforation in Hochrichtung (z-Richtung). Die Sollbiegestelle 48 kann insbesondere durch geeignete Verformung erzielt werden, die ein Biegen bzw. Einknicken an der entsprechenden Stelle bei Belastung bewirkt.

In Figur 9 ist eine Ausführungsform gezeigt, bei welcher an der vorderen Tragstruktur innenseitig eine Sollbiegestelle 48 und an der hinteren Tragstruktur 32 innenseitig eine Sollbruchstelle 46 vorgesehen ist. Die Sollbruchstelle 46 und die Sollbiegestelle 48 können wie vorstehend beschrieben bewirkt werden. Als Sollbruchstelle 46 ist in dem Fall der Ausführungsform aus Figur 9 zusätzlich auch eine oberseitige Ausnehmung 52 vorgesehen.

Die in der vorliegenden Beschreibung, in den Zeichnungen sowie in den Ansprüchen offenbarten Merkmale der Erfindung können sowohl einzeln als auch in beliebigen Kombinationen für die Verwirklichung der Erfindung in ihren verschiedenen Ausführungsformen wesentlich sein. Die Erfindung kann im Rahmen der Ansprüche und unter Berücksichtigung der Kenntnisse des zuständigen Fachmanns variiert werden.

### Bezugszeichenliste

- 10: Fahrzeugvorderwagen
- 12: Stoßfängerverkleidung
- 14: Frontscheinwerfer
- 16: Öffnung
- 18: Einsatzelement
- 20: Trittstufen-Anordnung
- 22: Schottplatte
- 24: Deformationselement
- 26: Stoßfängerquerträger
- 30: vordere Tragstruktur
- 32: hintere Tragstruktur
- 34: Längserstreckungselement
- 36: Längsstrebe
- 38: Vertikalträger
- 40: Prüfkörper
- 42: Langloch
- 44: Pfeil
- 46: Sollbruchstelle
- 48: Sollbiegestelle
- 50: Streckelement
- 52: Ausnehmung

## Patentansprüche

1. Fahrzeug mit frontseitiger Trittstufen-Anordnung (20), die eine in Fahrzeuglängsrichtung betrachtet vordere Tragstruktur (30) und eine in Fahrzeuglängsrichtung hinter der vorderen Tragstruktur (30) angeordnete hintere Tragstruktur (32) sowie mindestens ein sich von der vorderen Tragstruktur (30) zu der hinteren Tragstruktur (32) erstreckendes Längserstreckungselement (34) aufweist, wobei mindestens eines der Elemente als Deformationsstruktur derart ausgelegt ist, dass eine von vorne in Fahrzeuglängsrichtung auf die vordere Tragstruktur (30) einwirkende Anprallkraft eine Dreh- oder Schwenkbewegung der gesamten Trittstufen-Anordnung (20) bewirkt.

2. Fahrzeug nach dem vorstehenden Anspruch, **dadurch gekennzeichnet, dass** mindestens eines der Elemente als Deformationsstruktur derart ausgelegt ist, dass eine von vorne in Fahrzeuglängsrichtung auf die vordere Tragstruktur (30) einwirkende Anprallkraft auch eine Relativbewegung zwischen der vorderen Tragstruktur (30) und der hinteren Tragstruktur (32) bewirkt.

3. Fahrzeug nach einem der vorstehenden Ansprüche, **dadurch gekennzeichnet, dass** sich als Längserstreckungselemente (34) mindestens zwei Längsstreben (36) von der vorderen Tragstruktur (30) zu der hinteren Tragstruktur (32) erstrecken.

4. Fahrzeug nach einem der vorstehenden Ansprüche, **dadurch gekennzeichnet, dass** das mindestens eine Längserstreckungselement (34) relativbeweglich gegenüber der vorderen Tragstruktur (30) und/oder relativbeweglich gegenüber der hinteren Tragstruktur (32) angeordnet ist.

5. Fahrzeug nach einem der vorstehenden Ansprüche, **dadurch gekennzeichnet, dass** die vordere Tragstruktur (30) relativbeweglich gegenüber einem weiteren Karosserieelement fixiert ist.

6. Fahrzeug nach einem der vorstehenden Ansprüche, **dadurch gekennzeichnet, dass** die vordere Tragstruktur (30) und die hintere Tragstruktur (32) in einem Verbindungsbereich zusammengeführt und gemeinsam an einem weiteren Karosserieelement befestigt sind.

7. Fahrzeug nach einem der vorstehenden Ansprüche, **dadurch gekennzeichnet, dass** die vordere Tragstruktur (30) mittelbar oder unmittelbar an einem Stoßfängerquerträger (26) befestigt ist und/oder die hintere Tragstruktur (32) mittelbar oder unmittelbar an einer Schottplatte (22) befestigt ist.

8. Fahrzeug nach einem der vorstehenden Ansprüche, **dadurch gekennzeichnet, dass** die vordere Tragstruktur (30) und die hintere Tragstruktur (32) in Fahrzeugquerrichtung betrachtet außenseitig eines Deformationselements (24) angeordnet sind, das sich in Fahrzeuglängsrichtung zwischen einem Stoßfängerquerträger (26) und einer sich in Fahrzeuglängsrichtung hinter dem Stoßfängerquerträger (26) angeordneten Schottplatte (22) erstreckt.

9. Fahrzeug nach einem der vorstehenden Ansprüche, **dadurch gekennzeichnet, dass** die vordere Tragstruktur (30) und die hintere Tragstruktur (32) nur einseitig fixiert sind.

10. Fahrzeug nach einem der vorstehenden Ansprüche, **dadurch gekennzeichnet, dass** die Trittstufen-Anordnung (20) innerhalb einer in einer Stoßfängerverkleidung (12) ausgebildeten Öffnung (16) vorgesehen ist.

11. Fahrzeug nach einem der vorstehenden Ansprüche, **dadurch gekennzeichnet, dass** an der vorderen Tragstruktur (30) eine Sollbruchstelle (46) ausgebildet ist und/oder an der hinteren Tragstruktur (32) eine Sollbiegestelle (48) oder ein Drehgelenk ausgebildet ist oder umgekehrt.

## Claims

1. Vehicle having a front step arrangement (20) which comprises a front support structure (30) viewed in the longitudinal direction of the vehicle and a rear support structure (32) arranged behind the front support structure (30) in the longitudinal direction of the vehicle, as well as at least one longitudinal extension element (34) extending from the front support structure (30) to the rear support structure (32), at least one of the elements being designed as a deformation structure such that an impact force acting on the front support structure (30) from the front in the longitudinal direction of the vehicle causes a rotational or pivot movement of the entire step arrangement (20).

2. Vehicle according to the preceding claim, **characterized in that** at least one of the elements is designed as a deformation structure such that an impact force acting on the front support structure (30) from the front in the longitudinal direction of the vehicle also causes a relative movement between the front support structure (30) and the rear support structure (32).

3. Vehicle according to either of the preceding claims, **characterized in that** at least two longitudinal struts (36) extend from the front support structure (30) to the rear support structure (32) as longitudinal extension elements (34).

4. Vehicle according to any of the preceding claims, **characterized in that** the at least one longitudinal extension element (34) is arranged in a relatively movable manner with respect to the front support structure (30) and/or in a relatively movable manner with respect to the rear support structure (32).

5. Vehicle according to any of the preceding claims, **characterized in that** the front support structure (30) is fixed in a relatively movable manner with respect to another body element.

6. Vehicle according to any of the preceding claims, **characterized in that** the front support structure (30) and the rear support structure (32) are joined together in a connection region and are jointly attached to another body element.

7. Vehicle according to any of the preceding claims, **characterized in that** the front support structure (30) is attached directly or indirectly to a bumper cross member (26) and/or the rear support structure (32) is attached directly or indirectly to a bulkhead plate (22).

8. Vehicle according to any of the preceding claims, **characterized in that** the front support structure (30) and the rear support structure (32) are arranged, when viewed in the transverse direction of the vehicle, on the outside of a deformation element (24) which extends in the longitudinal direction of the vehicle between a bumper cross member (26) and a bulkhead plate (22) arranged behind the bumper cross member (26) in the longitudinal direction of the vehicle.

9. Vehicle according to any of the preceding claims, **characterized in that** the front support structure (30) and the rear support structure (32) are only fixed at one end.

10. Vehicle according to any of the preceding claims, **characterized in that** the step arrangement (20) is provided within an opening (16) formed in a bumper cover (12).

11. Vehicle according to any of the preceding claims, **characterized in that** a predetermined breaking point (46) is formed on the front support structure (30) and/or a predetermined bending point (48) or a rotational joint is formed on the rear support structure (32) or vice versa.

## Revendications

1. Véhicule comportant un agencement formant marchepied (20) côté avant, présentant une structure porteuse avant (30) vue dans le sens longitudinal du véhicule et une structure porteuse arrière (32) disposée derrière la structure porteuse avant (30) dans le sens longitudinal du véhicule, ainsi qu'au moins un élément d'extension longitudinale (34) s'étendant de la structure porteuse avant (30) à la structure porteuse arrière (32), dans lequel au moins l'un des éléments est conçu comme une structure de déformation de telle sorte qu'une force d'impact agissant de l'avant dans le sens longitudinal du véhicule sur la structure porteuse avant (30) provoque un mouvement de rotation ou de pivotement de l'ensemble de l'agencement formant marchepied (20).

2. Véhicule selon la revendication précédente, **caractérisé en ce qu'**au moins l'un des éléments est conçu comme une structure de déformation de telle sorte qu'une force d'impact agissant de l'avant dans le sens longitudinal du véhicule sur la structure porteuse avant (30) provoque également un mouvement relatif entre la structure porteuse avant (30) et la structure porteuse arrière (32).

3. Véhicule selon l'une des revendications précédentes,
**caractérisé en ce qu'**au moins deux entretoises longitudinales (36) s'étendent de la structure porteuse avant (30) à la structure porteuse arrière (32) en tant qu'éléments d'extension longitudinale (34).

4. Véhicule selon l'une des revendications précédentes,
**caractérisé en ce que** l'au moins un élément d'extension longitudinale (34) est disposé mobile de manière relative par rapport à la structure porteuse avant (30) et/ou mobile de manière relative par rapport à la structure porteuse arrière (32).

5. Véhicule selon l'une des revendications précédentes,
**caractérisé en ce que** la structure porteuse avant (30) est fixée mobile de manière relative par rapport à un autre élément de carrosserie.

6. Véhicule selon l'une des revendications précédentes, **caractérisé en ce que** la structure porteuse avant (30) et la structure porteuse arrière (32) sont réunies dans une zone de liaison et sont fixées conjointement à un autre élément de carrosserie.

7. Véhicule selon l'une des revendications précédentes,
**caractérisé en ce que** la structure porteuse avant (30) est fixée directement ou indirectement à une traverse de pare-chocs (26) et/ou la structure porteuse arrière (32) est fixée directement ou indirectement à une tôle de cloison (22).

8. Véhicule selon l'une des revendications précédentes,
**caractérisé en ce que** la structure porteuse avant (30) et la structure porteuse arrière (32) sont disposées, vues dans le sens transversal du véhicule, sur le côté extérieur d'un élément de déformation (24) qui s'étend dans le sens longitudinal du véhicule entre une traverse de pare-chocs (26) et une tôle de cloison (22) disposée derrière la traverse de pare-chocs (26) dans le sens longitudinal du véhicule.

9. Véhicule selon l'une des revendications précédentes,
**caractérisé en ce que** la structure porteuse avant (30) et la structure porteuse arrière (32) ne sont fixées que d'un seul côté.

10. Véhicule selon l'une des revendications précédentes,
**caractérisé en ce que** l'agencement formant marchepied (20) est prévu à l'intérieur d'une ouverture (16) formée dans un revêtement de pare-chocs (12).

11. Véhicule selon l'une des revendications précédentes,
**caractérisé en ce qu'un** point de rupture cible (46) est formé sur la structure porteuse avant (30) et/ou un point de flexion cible (48) ou une charnière est formé sur la structure porteuse arrière (32), ou inversement.
